# EUROPEAN PATENT SPECIFICATION

(11) **EP 4 497 232 B1**
(45) Date of publication and mention of the grant of the patent: **06.05.2026**
(21) Application number: 22717110.5
(22) Date of filing: 21.03.2022
(51) Int. Cl.: H04L 65/10

(54) **USER EQUIPMENT, SESSION MANAGEMENT NODE AND METHODS IN A COMMUNICATIONS NETWORK**
BENUTZERGERÄT, SITZUNGSVERWALTUNGSKNOTEN UND VERFAHREN IN EINEM KOMMUNIKATIONSNETZWERK
ÉQUIPEMENT UTILISATEUR, NOEUD DE GESTION DE SESSION ET PROCÉDÉS DANS UN RÉSEAU DE COMMUNICATION

(43) Date of publication of application: 29.01.2025
(73) Proprietor: Telefonaktiebolaget LM Ericsson (publ), 164 83 Stockholm (SE)
(72) Inventor: FOTI, George, Québec H9G 2Z8 (CA)
(74) Representative: Ericsson
(86) International application number: PCT/EP2022/057302
(87) International publication number: WO 2023/179838

(56) References cited:
- WO-A1-2021/205339
- WO-A1-2022/032220
- WO-A1-2022/035826

## Description

### TECHNICAL FIELD

Embodiments herein relate to a User Equipment (UE), a session management node and methods therein. In some aspects, they relate to accessing services in an Internet Protocol (IP) Multimedia Subsystem (IMS) network, in a communications network.

### BACKGROUND

In a typical wireless communication network, wireless devices, also known as wireless communication devices, mobile stations, stations (STA) and/or User Equipments (UE), communicate via a Wide Area Network or a Local Area Network such as a Wi-Fi network or a cellular network comprising a Radio Access Network (RAN) part and a Core Network (CN) part. The RAN covers a geographical area which is divided into service areas or cell areas, which may also be referred to as a beam or a beam group, with each service area or cell area being served by a radio network node such as a radio access node e.g., a Wi-Fi access point or a radio base station (RBS), which in some networks may also be denoted, for example, a NodeB, eNodeB (eNB), or gNB as denoted in Fifth Generation (5G) telecommunications. A service area or cell area is a geographical area where radio coverage is provided by the radio network node. The radio network node communicates over an air interface operating on radio frequencies with the wireless device within range of the radio network node.

3GPP is the standardization body for specify the standards for the cellular system evolution, e.g., including 3G, 4G, 5G and the future evolutions. Specifications for the Evolved Packet System (EPS), also called a Fourth Generation (4G) network, have been completed within the 3rd Generation Partnership Project (3GPP). As a continued network evolution, the new releases of 3GPP specifies a 5G network also referred to as 5G New Radio (NR).

Multi-antenna techniques can significantly increase the data rates and reliability of a wireless communication system. The performance is in particular improved if both the transmitter and the receiver are equipped with multiple antennas, which results in a Multiple-Input Multiple-Output (MIMO) communication channel. Such systems and/or related techniques are commonly referred to as MIMO.

In addition to faster peak Internet connection speeds, 5G planning aims at higher capacity than current 4G, allowing higher number of mobile broadband users per area unit, and allowing consumption of higher or unlimited data quantities in gigabyte per month and user. This would make it feasible for a large portion of the population to stream high-definition media many hours per day with their mobile devices, when out of reach of Wi-Fi hotspots. 5G research and development also aims at improved support of machine to machine communication, also known as the Internet of things, aiming at lower cost, lower battery consumption and lower latency than 4G equipment.

The IMS is a well-known 3GPP standard allowing sessions to be set up between two or more parties for a broad variety of services such as voice or video call, interactive messaging sessions or third party specific applications. A protocol chosen by 3GPP is the Session Initiation Protocol (SIP). SIP provides a mechanism for the registration of UEs and for setting up multimedia sessions. The SIP REGISTER method enables the registration of user agent's current location and the INVITE method enables the setting up of a session. IMS is being implemented by Public Land Mobile Network (PLMN) operators as an architectural framework for delivering IP multimedia services to their subscribers.

Stand-alone Non-Public Networks (NPN) using 5G technology will be widely deployed in the future. These networks may integrate with public 5G networks in more than one way, as defined in 3GPP TS 23.501. There is a need to enable UEs in NPNs to be able to fully utilize IMS services. These IMS services may be provided by the NPN itself or via third party providers, as depicted in 3GPP TS 23.228.

The prior art document WO2021/205339 A1 shows User Equipment (UE) connected to a Standalone Non-Public Network (SNPN) and which receives Internet Protocol Multimedia Subsystem (IMS) and emergency services by using an Enhanced Subscriber Identity Module (eSIM) to onboard access IMS credentials needed by the UEs to access those services. The prior art document WO2022/032220 A1 presents a base station which receives, from a network, a configuration message that comprises an indication that the network supports onboarding tecniques for a second network.

### SUMMARY

As part of developing embodiments herein a problem was identified by the inventor and will first be discussed.

One obvious choice for providing IMS services to NPN UEs is to allocate a profile in the IMS domain, provision necessary IMS credentials in the NPN UEs, and setup a subscriptions in a Home Subscriber Server (HSS). This has to be done for each NPN UE. However, the actual provisioning is an elaborate task for NPNs that may slow down the adoption of IMS services by NPNs.

An object of embodiments herein is to improve the performance of a communications network by a more efficient provisioning of IMS credentials to UEs in the communications network.

The present invention is defined by the subject-matter of the independent claims. Further detailed embodiments are defined in the dependent claims.

According to an aspect of embodiments herein, the object is achieved by a method performed by a UE for accessing services in an IMS network in a communications network. The UE is associated to an NPN connected to the communications network.

The UE establishes a first session by sending a first request message towards a session management node. The first request message comprises an indication indicating a session type for the first session. The session type is an IMS onboarding session type.

The UE connects to a server node using the first session, and obtains credentials related to the UE from the connected server node.

The UE ends the first session, and establishes a second session to the IMS network. The established second session enables the UE to access services in the IMS network by using the obtained credentials in an authentication procedure.

According to another aspect of embodiments herein, the object is achieved by a method performed by a session management node for assisting a UE in accessing services in an IMS network in a communications network. The UE is associated to an NPN connected to the communications network.

The session management node establishes a first session by receiving a first request message from the UE. The first request message comprises an indication indicating a session type. The session type is an IMS onboarding session type.

The session management node obtains, from a data management node, subscription data associated to the UE. The subscription data is related to the indicated session type.

The session management node instructs, based on the indicated session type, a user plane node to enforce a rule. The rule comprises enforcing a server node related to provisioning as the only allowed destination for the first session. The rule enables the UE to obtain credentials related to the UE from the server node in order to establish a second session to the IMS network and to access services in the IMS network.

According to another aspect of embodiments herein, the object is achieved by a UE configured to access services in an IMS network in a communications network. The UE is adapted to be associated to an NPN connected to the communications network. The UE is further configured to:
- Establish a first session by sending a first request message towards a session management node, which first request message is adapted to comprise an indication indicating a session type for the first session, the session type adapted to be an IMS onboarding session type,
- connect to a server node by using the first session
- obtain, from the connected server node, credentials adapted to be related to the UE,
- end the first session, and
- establish a second session to the IMS network, which established second session is adapted to enable the UE to access services in the IMS network by using the obtained credentials in an authentication procedure.

According to another aspect of embodiments herein, the object is achieved by a session management node configured to assist a UE to access services in an IMS network in a communications network. The UE is adapted to be associated to an NPN connected to the communications network. the session management node is further configured to:
- establish a first session by receiving a first request message from the UE, which first request message is adapted to comprise an indication indicating a session type, the session type adapted to be an IMS onboarding session type,
- obtain, from a data management node, subscription data adapted to be associated to the UE, which subscription data is adapted to be related to the indicated session type, and
- instruct, based on the indicated session type, a user plane node to enforce a rule, which rule is adapted to comprise to enforce a server node related to provisioning as the only allowed destination for the first session, wherein the rule is adapted to enable the UE to obtain credentials adapted to be related to the UE from the server node in order to establish a second session to the IMS network and to access services in the IMS network.

Thanks to that the UE establishes the first session that is an IMS onboarding session type, it is possible for the UE to obtain credentials and access services in the IMS network. During the establishment process of the first session, the session management node instructs the user plane node to enforce rule. Said rule is to only allow the server node as allowed destination for the first session. The UE connects to the server node using the first session, and obtains the credentials needed to establish the second session to the IMS network and access services in the IMS network. In this way an efficient mechanism for accessing services in the IMS network is achieved.

Embodiments herein bring the advantage of an efficient mechanism improving the performance of a communications network. This is achieved by a more efficient provisioning of IMS credentials to UEs in the communications network, where the UE, when establishing a first session, indicates that the first session is a IMS onboarding session type. This enables the UE to connect to the server node and obtain credentials for connecting to the IMS network. This leads to a more efficient provisioning of credentials to UEs associated to an NPN, and results in an improved performance of the communications network.

### BRIEF DESCRIPTION OF THE DRAWINGS

Examples of embodiments herein are described in more detail with reference to attached drawings in which:
- Figure 1: is a schematic block diagram illustrating embodiments of a communications network.
- Figure 2: is a flowchart depicting embodiments of a method in a UE.
- Figure 3: is a flowchart depicting embodiments of a method in a session management node.
- Figure 4: is a signaling diagram depicting examples of embodiments herein.
- Figure 5: is a signaling diagram depicting examples of embodiments herein.
- Figures 6: a and b are schematic block diagrams illustrating embodiments of a UE.
- Figures 7: a and b are schematic block diagrams illustrating embodiments of a session management node.
- Figure 8: schematically illustrates a telecommunication network connected via an intermediate network to a host computer.
- Figure 9: is a generalized block diagram of a host computer communicating via a base station with a user equipment over a partially wireless connection.
- Figures 10 to 13: are flowcharts illustrating methods implemented in a communication system including a host computer, a base station and a user equipment.

### DETAILED DESCRIPTION

Embodiments herein relate to a communications network and methods for accessing services in an IMS network.

As mentioned above, the object of embodiments herein is to improve the performance of a communications network by a more efficient provisioning of IMS credentials to UEs in the communications network.

Examples of embodiments herein may e.g., bring the advantage of enabling improved provisioning of credentials to NPN UEs for connecting to IMS networks. This enables NPN UEs to access services in IMS networks in an efficient manner.

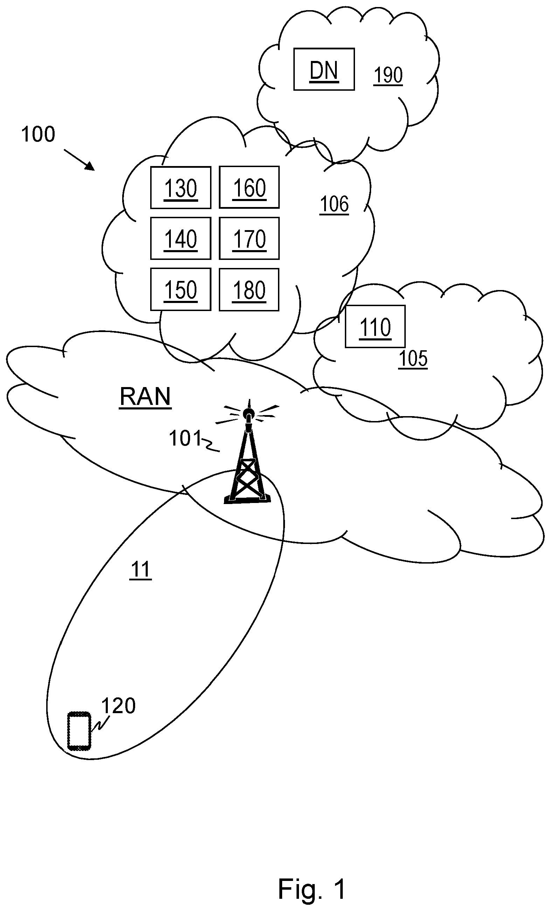

Figure 1 is a schematic overview depicting a communications network 100 wherein embodiments herein may be implemented. The communications network 100 comprises one or more RANs and one or more CNs. The communications network 100 may use 5G NR but may further use a number of other different technologies, such as, 6G, Wi-Fi, Long Term Evolution (LTE), LTE-Advanced, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

The communications network 100 further comprises an IMS network 105, in which IMS network 105 an IMS node, such as e.g. an IMS subscriber data node 180 operates. According to embodiments herein the IMS subscriber data node 180 may be a Home Subscriber Server (HSS). The IMS network 105 is an architecture for delivering media content over an IP packet switched transport.

The communication network 100 further comprises a non-public network, such as the NPN 106. A non-public network may e.g., be a stand-alone communications network using e.g., 5G network technology. The NPN 106 may comprise the CN. The NPN 106 may be interconnected with e.g., the IMS network 105.

One or more UEs operate in the communication network 100, such as e.g. the UE 120. The UE 120 may e.g. be 5G-RG, a UE, a remote UE, a wireless device, an NR device, a mobile station, a wireless terminal, an NB-IoT device, an MTC device, an eMTC device, a CAT-M device, a WiFi device, an LTE device and an a non-access point (non-AP) STA, a STA, that communicates via a base station such as e.g. a base station 101, one or more Access Networks (AN), e.g. a RAN, to one or more core network (CN) nodes, in one or more CNs, e.g., the NPN 106, one or more IMS nodes in the IMS network 105. The UE 120 may communicate with one or more CN nodes by a fixed network connection, such as e.g. cable and/or optical fiber. It should be understood by the skilled in the art that "UE" is a non-limiting term which means any terminal, client, mobile client, IMS client, wireless communication terminal, user equipment, Device to Device (D2D) terminal, or node e.g. smart phone, laptop, mobile phone, sensor, relay, mobile tablets or even a car or any small base station communicating within a cell.

Network nodes, such as e.g. a **server node 110,** may operate in the communications network 100. The data server node 110 may e.g. operate in the CN, e.g., the NPN 106, the IMS network 105 or be connected to said IMS network 105 or CN. The server node 110 may provide e.g., credentials for connecting to, and accessing services in, the IMS network 105. The server node 110 may also be referred to as provisioning node 110.

Network nodes, such as e.g. a **network node 130,** may operate in the communications network 100. The network node 130 may e.g. operate in the CN, e.g., the NPN 106. The network node 130 may provide e.g., exposure of capabilities and events, secure provisioning of information from external applications to 3GPP networks, such as e.g., the CN, e.g., the NPN 106, and translation of internal and/or external information. According to embodiments herein the network node 130 may be a Network Exposure Function (NEF).

Network nodes, such as e.g. a **session management node 140,** may operate in the communications network 100. The session management node 140 may e.g. operate in the CN, e.g., the NPN 106. The session management node 140 may provide e.g., session management, such as session establishment, modification, release, UE IP address allocation and management, termination of Non Access Stratum (NAS) signaling related to session management, downlink data notifications, traffic steering configuration for User Plane Function (UPF) for proper traffic routing. According to embodiments herein the session management node 140 may be a Session Management Function (SMF).

Network nodes, such as e.g. a data management node 150, may operate in the communications network 100. The data management node 150 may e.g. operate in the CN, e.g., the NPN 106. The data management node 150 may provide e.g., subscription management and identification handling for UEs, such as e.g., the UE 120. According to embodiments herein the data management node 150 may be a Unified Data Management (UDM) function.

Network nodes, such as e.g. a user plane node 160, may operate in the communications network 100. The user plane node 160 may e.g. operate in the CN, e.g., the NPN 106. The user plane node 160 may provide e.g., packet routing and forwarding, packet inspection, QoS handling, acts as external PDU session point of interconnect to data networks, and is an anchor point for intra- & inter-RAT mobility. According to embodiments herein the user plane node 160 may be a User Plane Function (UPF).

Network nodes, such as e.g. an access and mobility node 170, may operate in the communications network 100. The access and mobility node 170 may e.g. operate in the CN, e.g., the NPN 106. The user plane node 160 may provide e.g., termination of NAS signaling, NAS ciphering and integrity protection, registration management, connection management, mobility management, access authentication and authorization and security context management. According to embodiments herein the access and mobility node 170 may be a Access and Mobility Management Function (AMF).

Subscriber data nodes, such as e.g. a subscriber data node 180, may operate in the communications network 100. The IMS subscriber data node 140 may e.g. operate in the IMS network 105, the CN, e.g., the NPN 106, or be connected to said IMS network 105 or CN, e.g., the NPN 106. The subscriber data node 140 stores and manages subscriber data related to UEs, such as e.g. the first UE 121. According to embodiments herein the subscriber data node 180 may be a Home Subscriber Server (HSS).

Base stations such as the base station 101, operate in the wireless communications network 100. The base station 101 provides one or more cells such as a first cell 11. The base station 101 may be a transmission and reception point e.g. a radio access network node such as a base station, e.g. a radio base station such as a NodeB, an evolved Node B (eNB, eNode B), an NR Node B (gNB), a base transceiver station, a radio remote unit, an Access Point Base Station, a base station router, a transmission arrangement of a radio base station, a stand-alone access point, a Wireless Local Area Network (WLAN) access point or an Access Point Station (AP STA), an access controller, or any other network unit capable of communicating with UEs, such as the terminal 120, within the first cell 11, served by the base station 101. The base station 101 may be referred to as a serving radio network node and communicates with the UE 120 with Downlink (DL) transmissions to the UE 120 and Uplink (UL) transmissions from the terminal 120.

Methods according to embodiments herein are performed by the UE 120 and the session management node 140. These nodes may be Distributed Nodes (DN)s and functionality, e.g. comprised in a cloud 190 as shown in Figure 1 may be used for performing or partly performing the methods.

Examples of embodiments herein allow UEs associated to an NPN, such as the UE 120, to obtain credentials for access services in an IMS network, such as the IMS network 105.

Example of embodiments herein may provide methods for the UE 120 to access services in the IMS network 105. The UE 120 establishes a session, e.g., a Packet Data Unit (PDU) session or an IMS PDU session. The session is for onboarding purposes. Onboarding when used herein may mean that the session may only be used for provisioning credentials to the UE 120, which credentials may later be used to establish a session to and/or access services in the IMS network 106. In other words, the UE 120 may only use the session for obtaining the credentials. Once the session is established, the UE 120 connects to the server node 120 in order to download, such as obtain, credentials for connecting to, and access services in, the IMS network 105. In some examples of embodiments, the UE 120 may download a client application for accessing the IMS services. Once the credentials are downloaded, they are securely stored to be used with an IMS stack in the UE 120, e.g., in the client application.

In some examples, proprietary solutions may be used to download the credentials, while in other examples, embedded Subscriber Identity Module (eSIM) may be used.

In some examples, an AMF may select a special SMF , such as the session management node 140, dedicated for provisioning. The selection may be based on the presence of onboarding indication in the session establishment procedure. the AMF may e.g., use NRF discovery procedures or use local configured for the selection. An SMF dedicated for provisioning, such as e.g. the session management node 140, would register such a capability in the NRF.

In some examples, once the credentials are successfully provisioned, e.g., downloaded or obtained, in the UE 120, the UE 120 tears down, e.g., ends, the session used for onboarding and creates, e.g., establishes, a new session, e.g., a PDU session or an IMS PDU session, without the inclusion of the onboarding indicator. This second session may be used for accessing services in the IMS network 105.

Any required information needed by the UE 120 to interact with the server node 140 may have been pre-provisioned in the UE 120, or obtained by the UE 120 on demand, e.g. when establishing the first session, such as the session for onboarding purposes.

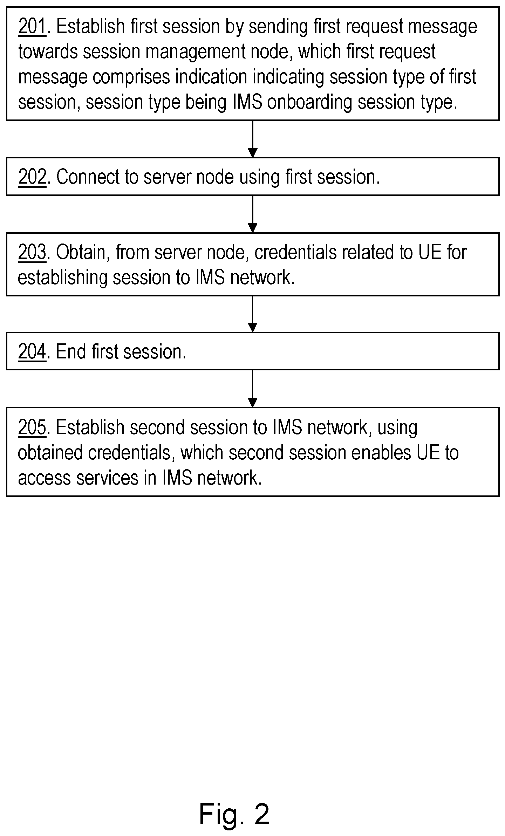

A method according to embodiments will now be described from the view of the UE 120 together with Figure 2. Figure 2 depicts example embodiments of a method performed by the UE 120 for accessing services in the IMS network 105 in the communications network 100. The UE 120 is associated to the NPN 106. The NPN 106 is connected to the communications network 100. The UE 120 being associated to the NPN 106, may mean that the NPN 106 is the home network of the UE 120, e.g., the UE 120 has a subscription to the NPN 106.

The method comprises the following actions, which actions may be taken in any suitable order. Actions that are optional are presented in dashed boxes in Figure 2.

### Action 201

The UE 120 establishes a first session by sending a first request message towards the session management node 140. The first request message comprises an indication indicating a session type for the first session. The session type is an IMS onboarding session type. The first session may e.g., be a Packet Data Unit (PDU) session. This may mean that when establishing the first session, the UE 120 requests to establish a PDU session that is an IMS onboarding type of session.

The first session may be a session that is used by the UE 120 for obtaining credentials in order to the establish another session, e.g., the second session. The second session may be a session for connecting to the IMS network 105 and accessing services in the IMS network 105.

In some embodiments, the UE 110 receives a first response message from the session management node 140. The first response message indicates that the first session is established. An address of the server node 110 may be needed to connect to the server node 110. When the address is not preconfigured in the UE 120, the UE 120 may need to obtain it from e.g., the session management node 140. Thus, the first response message may comprise the address of the server node 110.

### Action 202

The UE 120 connects to the server node 110 using the first session. The UE 120 may indicate a Subscription Permanent Identifier (SUPI) or a Generic Public Subscription Identifier (GPSI) associated to the UE 120 when connecting to the sever node 120. The SUPI or GPSI may e.g. be indicated, such as comprised in, a message requesting the connection to be established. The message may be sent to the server node 110.

A SUPI may mean Subscription Permanent Identifier as depicted in 3GPP TS 23.003.

A GPSI may mean Generic Public Subscription Identifier as depicted in 3GPP 23.003.

In some embodiments, the UE 120 connects to the server node 110 by establishing a secure connection, such as e.g. a secure tunnel, to the server node 110.

In some embodiments, the UE 120 connects to the server node 110 by using the address associated to the server node 110. The address is any one out: Pre-configured in the UE 120, or obtained from the session management node 140. As mentioned above, the address may be obtained from the session management node 140 in the first response message. This may mean that when the address is obtained from the session management node 140, the address is comprised in a first response message.

### Action 203

To be able to access IMS services in the IMS network 105, the UE 120 needs valid credentials.

The UE 120 obtains credentials related to the UE 120. The credentials is obtained from the connected server node 110. The credentials may be for establishing a session to, and accessing services in, the IMS network 105. The credentials may be obtained by using the connection to the server node 110.

An application, such as e.g., a client application, may be needed for the UE 120 to obtain the credentials. Such an application may be installed in the UE 120. Alternatively, the UE 120 may need to obtain, e.g., from the server node 110, the application.

Thus, in some embodiments, obtaining the credentials further comprises obtaining, from the server node 110, a client application. The client application may e.g., be for obtaining the credentials. The UE 120 may store the credentials in obtained client application. Alternatively, credentials may be stored in the UE 120 outside of the client application. The client application may be obtained by using the connection to the server node 110. Alternatively, the UE 120 may store the obtained credentials in the client application already installed in the UE 120.

The credentials may e.g., be used for authorization and/or authentication purposes to acquire IMS services. The credentials may e.g., be an IMS Private Identity (IMPI) and/or an IMS Public Identity (IMPU).

### Action 204

The UE 120 ends the first session. In other words, when the UE 120 has obtained the credentials needed to establish a session to the IMS network 105, the first session is no longer needed and is thus ended. This since the first session was on IMS onboarding session that was only to be used for obtaining the credentials.

### Action 205

The UE 120 establishes a second session to the IMS network 105. The established second session enables the UE 120 to access services in the IMS network 105 by using the obtained credentials in an authentication procedure.

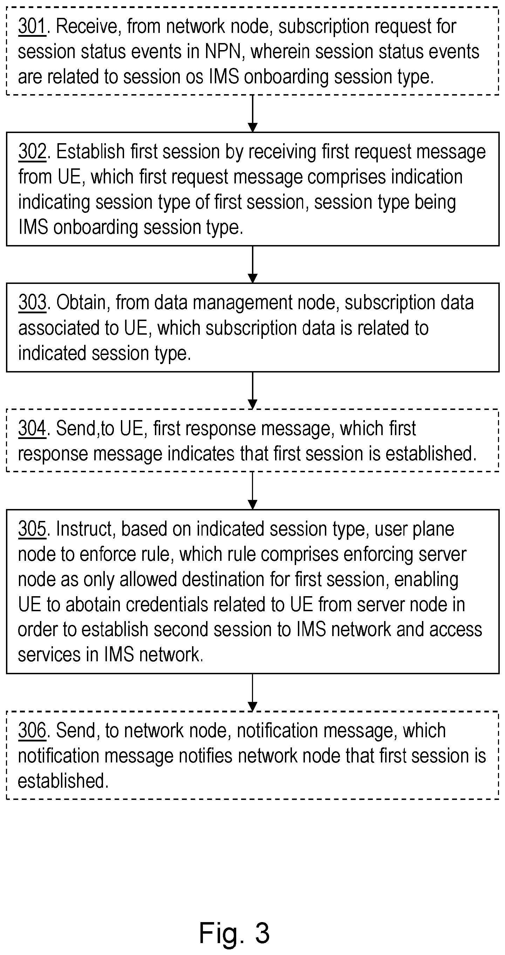

A method according to embodiments will now be described from the view of the first IMS node 110 together with **Figure 3.** Figure 3 depicts example embodiments of a method performed by the session management node 140 for assisting the UE 120 in accessing services in the IMS network 105 in the communications network 100. The UE 120 is associated to the NPN 106. The NPN 10 is connected to the communications network 100. The session management node may e.g., be an SMF.

The method comprises the following actions, which actions may be taken in any suitable order. Actions that are optional are presented in dashed boxes in Figure 3.

### Action 301

In some embodiment, the session management node 140 *receives,* from the network node 130, a subscription request. The subscription request is for session status events in the NPN 106. The session status events are related to sessions being of an IMS onboarding session type. In other words, the network node 130 starts a subscription for status events related to sessions that is of the IMS onboarding session type. The subscription may be for any UE establishing a session being of an IMS onboarding session type. Alternatively, or additionally, the subscription may be for a specific UE 120 establishing a session of an IMS onboarding session type. The subscription request may be a subscription request that is forwarded by the network node 130 from the server node 110. This may mean that the network node 130 acts as a proxy between the session management node 130 and the server node 110. The network node 130 may e.g., be a NEF.

### Action 302

The session management node 140 establishes the first session by receiving the first request message from the UE 120. The first request message comprises an indication indicating a session type for the first session. The session type is an IMS onboarding session type. As mentioned above, the first session may e.g., be a PDU session. This may mean that when establishing the first session, the UE 120 requests to establish a PDU session that is an IMS onboarding type of session.

The first session is a session that is used by the UE 120 for obtaining credentials in order to the establish another session, e.g., the second session. The second session may a session for connecting to the IMS network 105 and accessing services in the IMS network 105.

Based on the session type indication, the session management node 140 may determine that the first session is of the IMS onboarding session type.

### Action 303

To establish the first session, the session management node 140 needs data related to the subscription of the UE 120.

The session management node 140 obtains subscription data from the data management node 150. The subscription data is associated to the UE 120. The subscription data is related to the indicated session type.

By obtaining the subscription data, the session management node 140 is enabled to establish the first session. As discussed below, the subscription data may comprise the address to the server node 110 providing the credentials to the UE 120.

The subscription data may e.g., be the session management subscription data as described in 3GPP TS 23.502.

The data management node may e.g., be a UDM node.

In some embodiments, the obtaining the subscription data further comprises obtaining the address of the server node 110. The address is e.g. any one out of: Comprised in the obtained subscription data, pre-configured in the session management node 140, or a target address used by the UE 120 for establishing the first session.

When the address of the server node 110 is obtained from the target address of the first session, this may mean that the obtained address is pre-configured in the UE 120.

As will be further discussed below, the address of the server node 110 may be used to apply certain rules to the first session.

### Action 304

In some embodiments, the session management node 140 sends a first response message to the UE 120. The first response message indicates that the first session is established.

In some examples, the UE 120 is not aware of the address of the server node 110, such as when the address is comprised in the obtained subscription data of preconfigured in the session management node 140. In such examples, the UE 120 needs to be provided with the address. Therefore, the first response message may comprise the obtained address of the server node 140. This allows the UE 120 to use the first session to connect to the server node 110 in order to obtain the credentials for establishing a session to the IMS network 105.

### Action 305

The session management node 140 instruct, based on the indicated session type, a user plane node 160 to enforce a rule. The rule comprises enforcing the server node 110 related to provisioning as the only allowed destination for the first session. This enables the UE 120 to obtain credentials related to the UE 120 from the server node 110 in order to establish the second session to the IMS network 105 and to access services in the IMS network 105. As mentioned above, the first session may be a session that is used by the UE 120 for obtaining credentials in order to the establish another session, e.g., the second session. Thus, by instructing the user plane node 160 to enforce the rule, the session management node 140 ensures that the UE 120 is allowed to connect to the server node 120 using the first session, e.g., for obtaining the credentials.

To be based on the indicated session type may e.g., mean that the session management node 140, when establishing the first session, takes the indicated session type into account when instructing the user plan node 160 to enforce the rule. Since the first request message indicates that the session type is an IMS onboarding session, the session management node 140 knows that the UE 120 is interested in obtaining credentials from a server node, such as the server node 110, e.g., for establishing a another session to the IMS network 105. Thus, the session management node 140 instructs the user plane node 160 to enforce a rule that only allows the UE 120 to communicate with, such as connect to, the server node 110 while using the first session.

In some embodiments, the rule further comprises using the obtained address as the address of the server node 140.

The session management node 140 may in some embodiments further instruct the user plane node 160 to enforce the rule based on the obtained subscription data. This may be the case e.g., when the address of the server node 110 is obtained from the obtained subscription data associated to the UE 120.

### Action 306

In some embodiments, upon determining that the first session is an IMS onboarding session type, the session management node 140 *sends,* a notification message to the network node 130. The notification message notifies the network node 130 that the first session is established. The notification may comprise an identity of the UE 120. This may mean that the notification may comprise the identity of the UE 120 that established the first session. In other words, since the network node 130 has subscribed to status events related to sessions that are of the IMS onboarding session type, the session management node 140 notifies the network node 130 that the first session is established. This since the first session is of the IMS onboarding session type. This may enable the network node 130 to, in turn, notify the server node 110 that the first session is established. The server node 110 may then, when the UE 120 connects to the server node 110, validate that the UE 120 is the UE 120 that established the first session before providing the credentials to the UE 120.

In some embodiments, when the subscription is for a specific UE, such as the UE120, the session management node 140 determines that the subscription is for session status event for the specific UE 120. This may be determined before sending the notification to the network node 130.

Embodiments mentioned above will now be further described and exemplified. The embodiments below is applicable to and may be combined with any suitable embodiment described above.

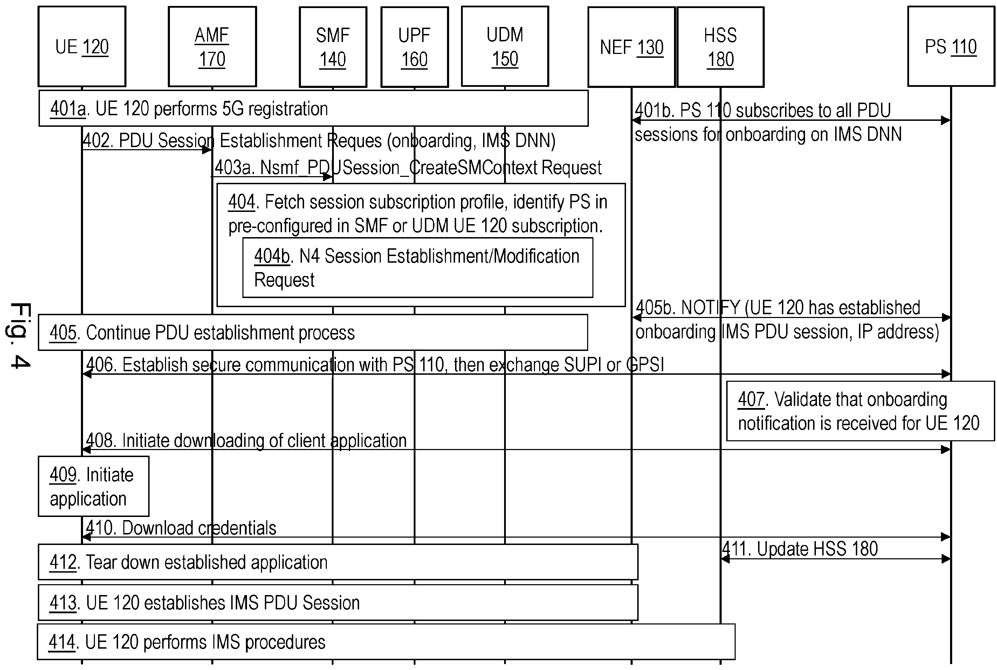

**Figure 4** shows an example of embodiments herein. In the examples of Figure 4, the server node 110 may be referred to as e.g. the Provisioning Server (PS) 110, the network node 130 may be referred to as e.g., Network Exposure Function (NEF) 130, the session management node 140 may be referred to as e.g. SMF 140 the data management node 150 may be referred to as e.g. UDM 150, the user plan node 160 may be referred to as e.g. UPF 160, the access and mobility node 170 may be referred to as e.g., AMF 170 and the subscriber data node 180 may be referred to as e.g., HSS 180. According to this example, a proprietary PS, such as the PS 110 is used for providing the credentials to the UE 120.

401a. The UE 120 may perform a 5G Core (5GC) registration as per existing procedures in 3GPP TS 23.502.

401b. The PS 110 of the provider of the IMS network 105 may subscribe to the PDU session status for the NPN of interest, such as e.g. the NPN 106. The PS 110 may discover the NEF 130 for the NPN 106 and subscribe to the PDU session status event for any UE associated to the NPN 106, such as e.g. the UE 120. The PS 110 may subscribe to the PDU session status associated with a PDU session, e.g., an IMS PDU session, of IMS onboarding session type.

402. The UE 120 initiates, such as establishes, a PDU IMS session, such as the first session, for onboarding purposes. This may e.g., be performed according to 3GPP TS 23.502. The UE 120 indicates that the session is an IMS onboarding session type.

This action is related to, and may be combined with, Actions 201 and 301 above.

403. The AMF 170 may initiate an Nsff_PDUSession_CreateSMConext Request towards a selected SMF, such as e.g. the SMF 140 which is also referred to as session management node 140. The AMF 170 may select the SMF 140 as described above in the solution description, or any SMF may be selected by the AMF 170.

**404 a and b.** The SMF 140 fetches, such as obtains, the session subscription related information, such as the subscription data related to the UE 120. The SMF 140 instructs UPF 160 to enforce the PS 110 as the only allowed destination for such a session, e.g., the first session. The SMF 140 may locate, such as obtain, the address of the PS 110 if pre-configured in the SMF 140 or if available in the UE subscription, such as the obtained subscription data. The SMF 140 may instructs UPF 160 to enforce address of the PS 110 as the only allowed destination address for the first session. If the address of the PS 110 is not available, the SMF 110 may instructs UPF 160 to enforce the IP target address used by the UE 120 for that session, such as the first session, as the only allowed destination address for the first session. The SMF 140 may use a special destination address e.g., FFFF, that instructs the UPF as per the above, or some additional control information may be used. If the PS address is available then the SMF 140 may use existing procedures to enforce the IP address being the only allowed target one for that IMS PDU onboarding session, such as the first session.

This action is related to, and may be combined with, Actions 201, 302 and 304 above.

405. the PDU Session Establishment, such as the establishing of the first session, may continue as per existing procedures in 23.502. The SMF may send a response indicating acceptance of the establishing of the first session, such as the first response message. The response may comprise the address of the PS 110 if the UE 120 is not pre-configured with this information.

This action is related to, and may be combined with, Actions 201 and 303 above.

405b. The PS 110 may receive a notification from the NEF 130 that the UE 120 has established an onboarding PDU IMS session, such as the first session. Interaction between the NEF 130 and SMF 140 is not shown. The notification supports the IMS onboarding type for IMS PDU session, such as the first session.

406. The UE 120 establishes a secure tunnel with, such as connects to, the PS 110. The UE 120 may be pre-configured with the address of the PS 110, or the PS 110 address may be received from the SMF 140, e.g., in the response indicating acceptance of the establishing of the first session, such as the first response message. The UE 120 may include either the SUPI or GPSI in the establishment process.

This action is related to, and may be combined with, Action 202.

407. The PS 110 may validate that it did indeed receive the notification for the UE 120 for an onboarding IMS PDU session, such as the first session. As an alternative, and instead of Actions 407, 401b, and 405b, the PS may subscribe to the NEF 130 for the UE identity (ID) received in Action 406 and confirm that the UE 120 has established an IMS PDU session for onboarding, such as the first session.

408. The PS 110 may optionally provide a client for downloading, such as e.g. obtaining, the needed credentials from the PS 110, such as the client application, to the UE 120. That is, the UE 120 may download the client application from the PS 110. In some examples the UE 120 is already provisioned with the client application. In such examples, Action 408 may be skipped.

This action is related to, and may be combined with, Action 203 above.

409. Once the client downloading is completed, the UE 120 may automatically launch, such as initiate or start, the client application.

410. The UE 120 initiates the IMS credentials provisioning procedure with the PS 110. That is, the UE 120 obtains the credentials from the PS 110.

This action is related to, and may be combined with, Action 203 above.

411. The PS 110 may interact with the HSS 180 to inform HSS 180 of the completion of the downloading of the IMS credentials, such as when the UE 120 has obtained the credentials. The HSS 180 may now start the use of the subscription of the UE 120. That is, the HSS 180 may be updated with subscription data related to the UE 120 that has been downloaded with the needed credentials.

412. Once the IMS credentials downloading is complete, such as when the UE has obtained the credentials, the UE 120 teras down, such as ends, the onboarding PDU IMS session, such as the first session.

This action is related to, and may be combined with, Action 204 above.

413. The UE 120 initiates, such as establishes an IMS PDU connection, such as the second session.

This action is related to, and may be combined with, Action 205 above.

414. The UE 120 may initiate IMS procedures based on existing specifications and using the obtained credentials for that purpose.

This action is related to, and may be combined with, Action 205 above.

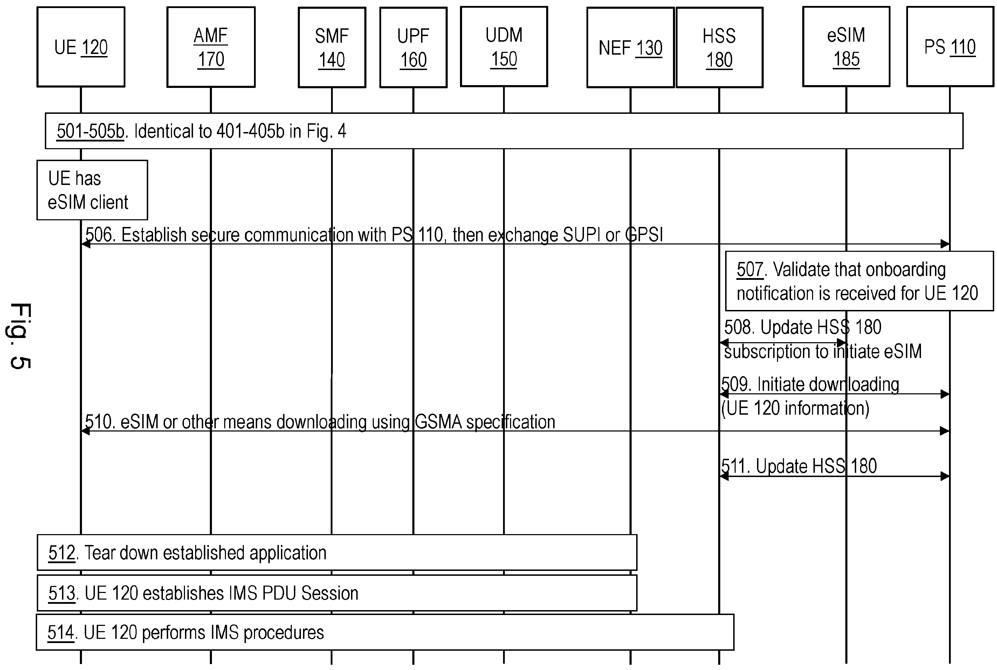

**Figure** 5 shows an example of embodiments herein. In the examples of Figure 5, the server node 110 may be referred to as e.g. the Provisioning Server (PS) 110, the network node 130 may be referred to as e.g., NEF 130, the session management node 140 may be referred to as e.g. SMF 140 the data management node 150 may be referred to as e.g. UDM 150, the user plan node 160 may be referred to as e.g. UPF 160, the access and mobility node 170 may be referred to as e.g., AMF 170 and the subscriber data node 180 may be referred to as e.g., HSS 180. According to this example, the Group Speciale Mobile Association (GSMA) eSIM procedures are used and these are standardized in GSMA specifications. In this example, the UE 120 has the eSIM client downloaded.

In the second option shown in the call flow below, GMSA embedded Subscriber Identity Module (eSIM) procedures are used and these are standardized in GSMA specifications. In this case, the UE 120 would have the eSIM client already available in the UE 120.

Actions 501-505b are identical to Actions 401-405 described above and are thus not described here.

506. The UE 120 initiates communication with the PS 110 which is equivalent to the entitlement server in eSIM terminology. This action is related to, and may be combined with, Action 202 above.

507. The PS 110 may validate that it did indeed receive the notification for the UE 120 for an onboarding IMS PDU session, such as the first session.

Actions 508-511 are typical eSIM procedures as depicted in GSMA specifications.

Actions 512-514 are identical to Actions 412-414 described above and are thus not described here.

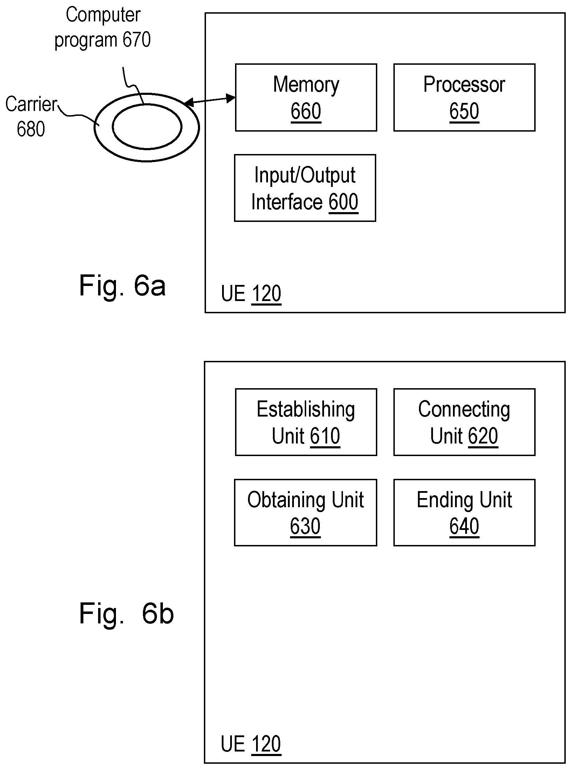

To perform the method actions, the UE 120 may comprise an arrangement depicted in Figure 6a and b. The UE 120 is configured to access services in the IMS network 105 in the communications network 100. The UE 120 is adapted to be associated to the NPN 106 connected to the communications network 100.

The UE 120 may comprise an input and output interface 600 configured to communicate with e.g. session management node 140, the server node 110 and with network nodes in the communications network 100, the IMS network 105 and the NPN 106.

The UE 120 is further configured to, e.g. by means of an establishing unit 610 in the UE 120, establish the first session by sending the first request message towards the session management node 140. The first request message is adapted to comprise the indication indicating a session type for the first session. The session type is adapted to be an IMS onboarding session type.

The UE 120 is further configured to, e.g. by means of the establishing unit 610 in the UE 120, establish the second session to the IMS network 105. The established second session is adapted to enable the UE 120 to access services in the IMS network 105 by using the obtained credentials in an authentication procedure.

The UE 120 may further be configured to, e.g. by means of the establishing unit 610 in the UE 120, establishing the first session by further being configured to receive a first response message from the session management nope 140. The first response message is adapted to indicate that the first session is established.

The first response message may be adapted to comprise the address of the server node 110.

The UE 120 is further configured to, e.g. by means of a connecting unit 620 in the UE 120, connect to the server node 110 by using the first session.

The UE 120 may further be configured to, e.g. by means of the connecting unit 620 in the UE 120, connect to the server node 110 by further being configured to use the address associated to the server node 110. The address is adapted to be any one out: Pre-configured in the UE 120, or obtained from the session management node 140.

When the address is obtained from the session management node 140, the address is adapted to be comprised in the first response message received from the session management node 140.

The UE 120 is further configured to, e.g. by means of an obtaining unit 630 in the UE 120, obtain, from the connected server node 110, credentials adapted to be related to the UE 120.

The UE 120 may further be configured to, e.g. by means of the obtaining unit 630 in the UE 120, obtain the credentials by further being configured to obtain, from the server node 110, a client application for obtaining the credentials.

The UE 120 is further configured to, e.g. by means of an ending unit 640 in the UE 120, end the first session.

The embodiments herein may be implemented through a respective processor or one or more processors, such as the processor 650 of a processing circuitry in the UE 120 depicted in Figure 6a, together with respective computer program code for performing the functions and actions of the embodiments herein. The program code mentioned above may also be provided as a computer program product, for instance in the form of a data carrier carrying computer program code for performing the embodiments herein when being loaded into the UE 120. One such carrier may be in the form of a CD ROM disc. It is however feasible with other data carriers such as a memory stick. The computer program code may furthermore be provided as pure program code on a server and downloaded to the UE 120.

The UE 120 may further comprise a memory 660 comprising one or more memory units. The memory comprises instructions executable by the processor 650 in the UE 120. The memory 660 is arranged to be used to store e.g. information, messages, indications, subscriber data, data, profile data, selection data, service requests, connections, identities, communication data and applications and applications to perform the methods herein when being executed in the UE 120.

In some embodiments, a computer program 670 comprises instructions, which when executed by the respective at least one processor 650, cause the at least one processor 650 of the UE 120 to perform the actions above.

In some embodiments, a respective carrier 680 comprises the respective computer program 670, wherein the carrier 680 is one of an electronic signal, an optical signal, an electromagnetic signal, a magnetic signal, an electric signal, a radio signal, a microwave signal, or a computer-readable storage medium.

Those skilled in the art will appreciate that the units in the UE 120 described above may refer to a combination of analog and digital circuits, and/or one or more processors configured with software and/or firmware, e.g. stored in the UE 120, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

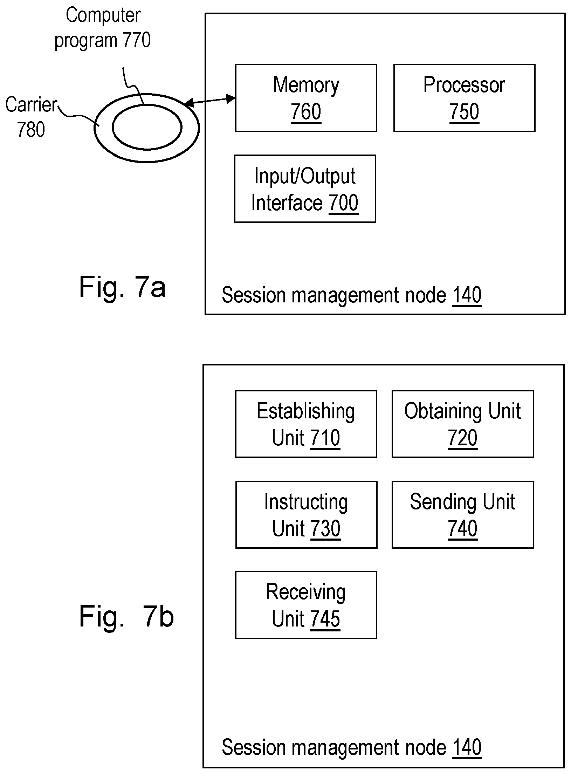

To perform the method actions, the session management node 140 may comprise an arrangement depicted in Figure 7a and b. the session management node 140 is configured to assist the UE 120 to access services in the IMS network in the communications network 100. The UE 120 is adapted to be associated to the NPN 106 connected to the communications network 100.

The session management node 140 may comprise an input and output interface 700 configured to communicate with e.g. the UE 120, data management node 150 and with network nodes in the communications network 100 and the IMS network 105.

The session management node 140 is further configured to, e.g. by means of an establishing unit 710 in the session management node 140, establish the first session by receiving the first request message from the UE 120. The first request message is adapted to comprise an indication indicating a session type. The session type is adapted to be an IMS onboarding session type.

The session management node 140 is further configured to, e.g. by means of an obtaining unit 720 in the session management node 140, obtain, from the data management node 150, subscription data adapted to be associated to the UE 120. The subscription data is adapted to be related to the indicated session type.

The session management node 140 may further be configured to, e.g. by means of the obtaining unit 720 in the session management node 140, obtain the subscription data by further being configured to obtain the address of the server node 110. The address is adapted to be any one out of: Comprised in the obtained subscription data, pre-configured in the session management node 140, or the target address used by the UE 120 for establishing the first session.

The session management node 140 is further configured to, e.g. by means of an instructing unit 730 in the session management node 140, instruct, based on the indicated session type, the user plane node 160 to enforce a rule. The rule is adapted to comprise to enforce the server node 110 related to provisioning as the only allowed destination for the first session. The rule is adapted to enable the UE 120 to obtain credentials adapted to be related to the UE 110 from the server node 110 in order to establish the second session to the IMS network 105 and to access services in the IMS network 105.

The rule may further comprise using the obtained address as the address of the server node 140.

The session management node 140 may further be configured to, e.g. by means of a sending unit 740 in the session management node 140, send, to the UE 120, a first response message. The first response message is adapted to indicate that the first session is established.

The first response message may be adapted to comprise the obtained address of the server node 140.

The session management node 140 may further be configured to, e.g. by means of the sending unit 740 in the session management node 140, upon determining that the first session is an IMS onboarding session type, *send,* to the network node 130, a notification message. The notification message is adapted to notify the network node 130 that the first session is established.

The session management node 140 may further be configured to, e.g. by means of a receiving unit 745 in the session management node 140, *receive,* from the network node 130, a subscription request for session status events in the NPN 106. The session status events are adapted to be related to sessions being of an IMS onboarding session type.

The embodiments herein may be implemented through a respective processor or one or more processors, such as the processor 750 of a processing circuitry in the session management node 140 depicted in Figure 7a, together with respective computer program code for performing the functions and actions of the embodiments herein. The program code mentioned above may also be provided as a computer program product, for instance in the form of a data carrier carrying computer program code for performing the embodiments herein when being loaded into the session management node 140. One such carrier may be in the form of a CD ROM disc. It is however feasible with other data carriers such as a memory stick. The computer program code may furthermore be provided as pure program code on a server and downloaded to the session management node 140.

The session management node 140 may further comprise a memory 760 comprising one or more memory units. The memory 760 comprises instructions executable by the processor 750 in the session management node 140. The memory 760 is arranged to be used to store e.g. information, messages, indications, subscriber data, data, profile data, selection data, service requests, connections, identities, communication data and applications to perform the methods herein when being executed in the session management node 140.

In some embodiments, a computer program 770 comprises instructions, which when executed by the respective at least one processor 750, cause the at least one processor 750 of the session management node 140 to perform the actions above.

In some embodiments, a respective carrier 780 comprises the respective computer program 770, wherein the carrier 780 is one of an electronic signal, an optical signal, an electromagnetic signal, a magnetic signal, an electric signal, a radio signal, a microwave signal, or a computer-readable storage medium.

Those skilled in the art will appreciate that the units in the session management node 140 described above may refer to a combination of analog and digital circuits, and/or one or more processors configured with software and/or firmware, e.g. stored in the session management node 140, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

### Further Extensions and Variations

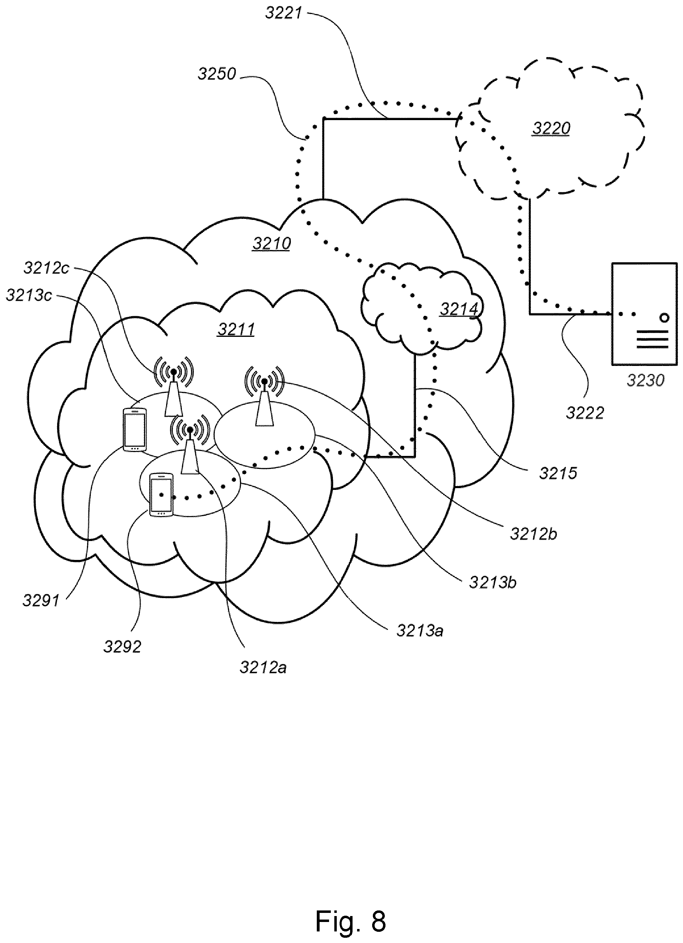

With reference to Figure 8, in accordance with an embodiment, a communication system includes a telecommunication network 3210, such as a 3GPP-type cellular network, which comprises an access network 3211, such as a radio access network, and a core network 3214. The core network 3214 may e.g. comprise the session management node 140. The access network 3211 comprises a plurality of base stations 3212a, 3212b, 3212c, e.g. the base station 101, such as AP STAs NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) such as the UE 120 and/or a Non-AP STA 3291 located in coverage area 3213c is configured to wirelessly connect to, or be paged by, the corresponding base station 3212c. A second UE 3292 such as another UE 120 and/or a Non-AP STA in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 8 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

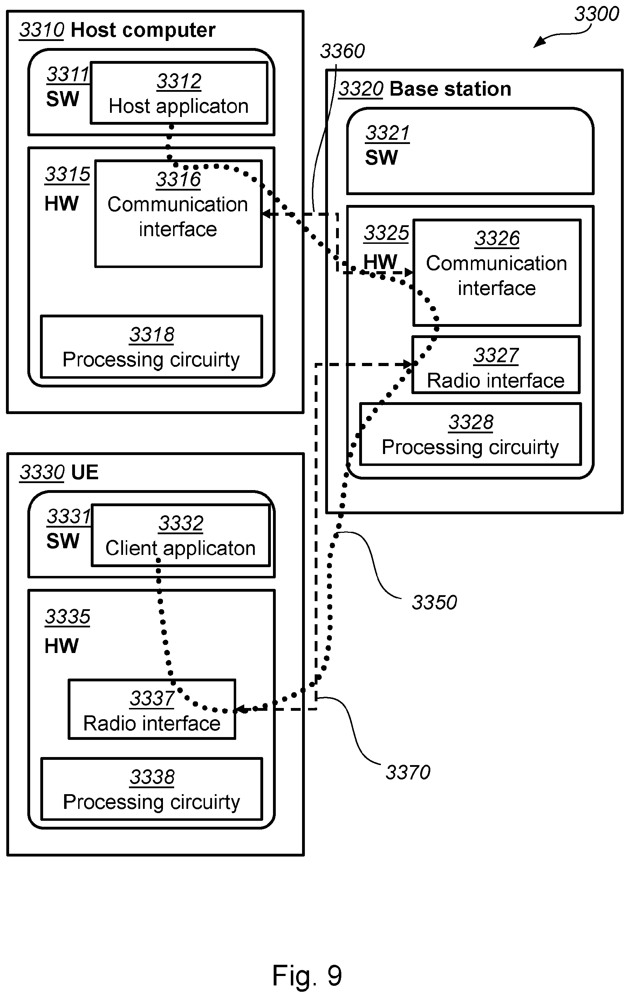

Example implementations, in accordance with an embodiment, of the UE, base station and host computer discussed in the preceding paragraphs will now be described with reference to **Figure** 9. In a communication system 3300, a host computer 3310 comprises hardware 3315 including a communication interface 3316 configured to setup and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Figure 9) served by the base station 3320. The communication interface 3326 may be configured to facilitate a connection 3360 to the host computer 3310. The connection 3360 may be direct or it may pass through a core network (not shown in Figure 9) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to setup and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides. It is noted that the host computer 3310, base station 3320 and UE 3330 illustrated in Figure 9 may be identical to the host computer 3230, one of the base stations 3212a, 3212b, 3212c and one of the UEs 3291, 3292 of Figure 8, respectively. This is to say, the inner workings of these entities may be as shown in Figure 9 and independently, the surrounding network topology may be that of Figure 8.

In Figure 9, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the [select the applicable RAN effect: data rate, latency, power consumption] and thereby provide benefits such as [select the applicable corresponding effect on the OTT service: reduced user waiting time, relaxed restriction on file size, better responsiveness, extended battery lifetime].

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

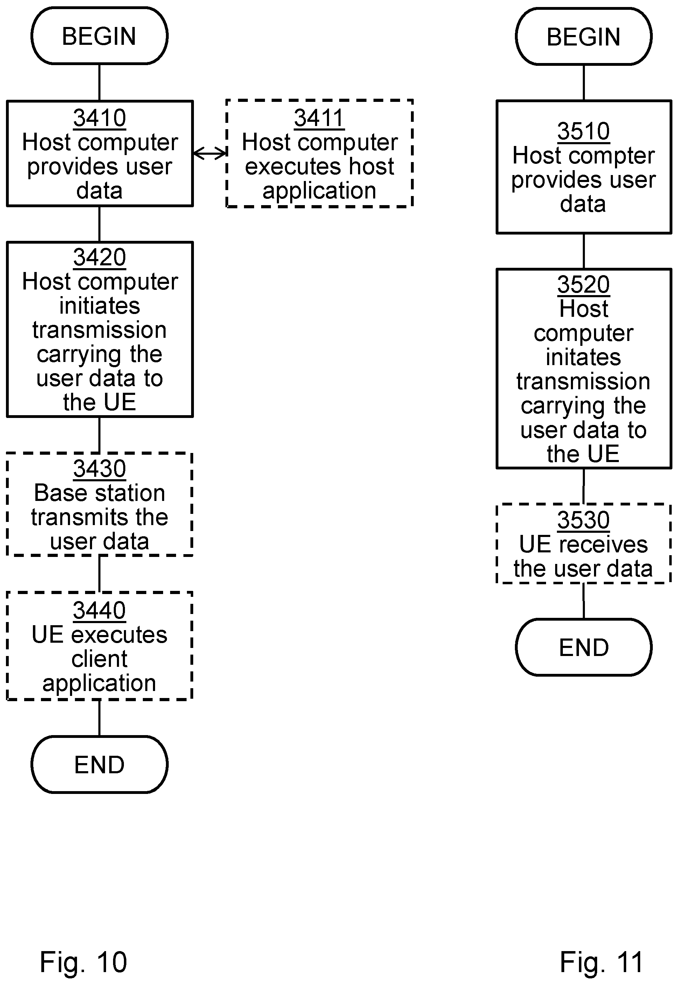

Figure 10 is a flowchart illustrating a method implemented in a communication system, in accordance with one embodiment. The communication system includes a host computer, a base station such as a AP STA, and a UE such as a Non-AP STA which may be those described with reference to Figure 8 and Figure 9. For simplicity of the present disclosure, only drawing references to Figure 10 will be included in this section. In a first step 3410 of the method, the host computer provides user data. In an optional substep 3411 of the first step 3410, the host computer provides the user data by executing a host application. In a second step 3420, the host computer initiates a transmission carrying the user data to the UE. In an optional third step 3430, the base station transmits to the UE the user data which was carried in the transmission that the host computer initiated, in accordance with the teachings of the embodiments described throughout this disclosure. In an optional fourth step 3440, the UE executes a client application associated with the host application executed by the host computer.

Figure 11 is a flowchart illustrating a method implemented in a communication system, in accordance with one embodiment. The communication system includes a host computer, a base station such as a AP STA, and a UE such as a Non-AP STA which may be those described with reference to Figure 8 and Figure 9. For simplicity of the present disclosure, only drawing references to Figure 11 will be included in this section. In a first step 3510 of the method, the host computer provides user data. In an optional substep (not shown) the host computer provides the user data by executing a host application. In a second step 3520, the host computer initiates a transmission carrying the user data to the UE. The transmission may pass via the base station, in accordance with the teachings of the embodiments described throughout this disclosure. In an optional third step 3530, the UE receives the user data carried in the transmission.

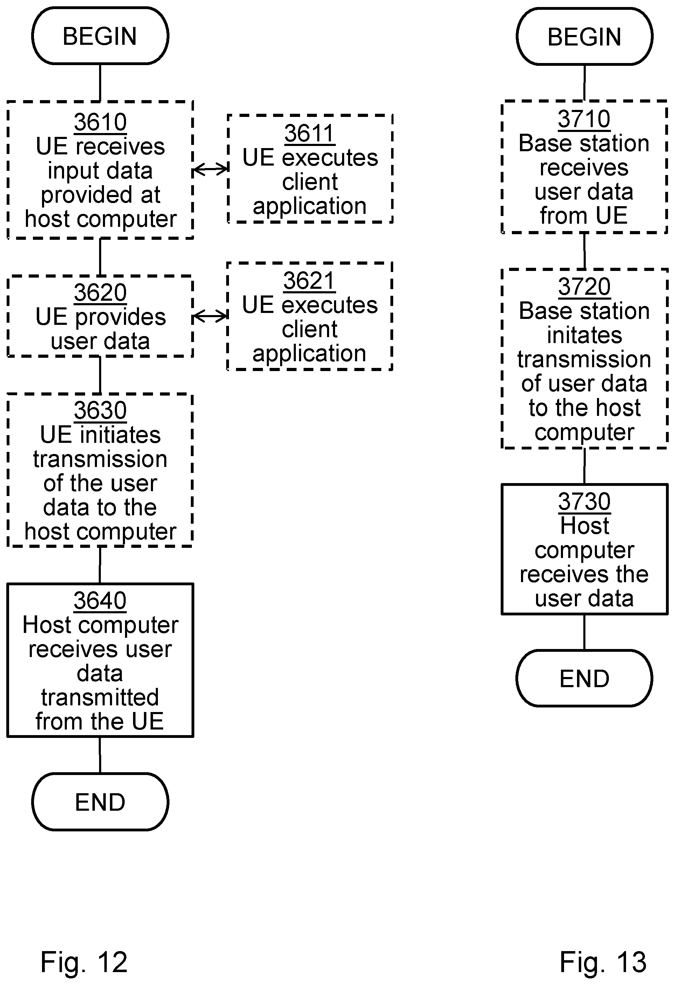

Figure 12 is a flowchart illustrating a method implemented in a communication system, in accordance with one embodiment. The communication system includes a host computer, a base station such as a AP STA, and a UE such as a Non-AP STA which may be those described with reference to Figure 8 and Figure 9. For simplicity of the present disclosure, only drawing references to Figure 12 will be included in this section. In an optional first step 3610 of the method, the UE receives input data provided by the host computer. Additionally, or alternatively, in an optional second step 3620, the UE provides user data. In an optional substep 3621 of the second step 3620, the UE provides the user data by executing a client application. In a further optional substep 3611 of the first step 3610, the UE executes a client application which provides the user data in reaction to the received input data provided by the host computer. In providing the user data, the executed client application may further consider user input received from the user. Regardless of the specific manner in which the user data was provided, the UE initiates, in an optional third substep 3630, transmission of the user data to the host computer. In a fourth step 3640 of the method, the host computer receives the user data transmitted from the UE, in accordance with the teachings of the embodiments described throughout this disclosure.

Figure 13 is a flowchart illustrating a method implemented in a communication system, in accordance with one embodiment. The communication system includes a host computer, a base station such as an AP STA, and a UE such as a Non-AP STA which may be those described with reference to Figure 8 and Figure 9. For simplicity of the present disclosure, only drawing references to Figure 13 will be included in this section. In an optional first step 3710 of the method, in accordance with the teachings of the embodiments described throughout this disclosure, the base station receives user data from the UE. In an optional second step 3720, the base station initiates transmission of the received user data to the host computer. In a third step 3730, the host computer receives the user data carried in the transmission initiated by the base station.

When using the word "comprise" or "comprising" it shall be interpreted as non-limiting, i.e. meaning "consist at least of".

The embodiments herein are not limited to the above described preferred embodiments. Various alternatives and modifications are possible when falling within the scope of the appended claims.

## Claims

1. A method performed by a User Equipment, UE, (120) for accessing services in an Internet Protocol, IP, Multimedia Subsystem, IMS, network (105) in a communications network (100), which UE (120) is associated to a non-public network, NPN, (106) connected to the communications network (100), the method comprising:
*establishing* (201) a first session by sending a first request message towards a session management node (140), which first request message comprises an indication indicating a session type for the first session, the session type being an IMS onboarding session type,
the method being **characterized in**:
*connecting* (202) to a server node (110) using the first session and an address associated to the server node (110), wherein the address is pre-configured in the UE (120),
*obtaining* (203), from the connected server node (110), credentials related to the UE (120),
*ending* (204) the first session, and
*establishing* (205) a second session to the IMS network (105), which established second session enables the UE (120) to access services in the IMS network (105) using the obtained credentials in an authentication procedure.

2. The method according to claim 1, wherein *connecting* (202) to the server node (110) comprises using an address associated to the server node (110), and wherein the address is:
- obtained from the session management node (140), when the address is not pre-configured in the UE (120).

3. The method according to claim 2, wherein when the address is obtained from the session management node (140), the address is comprised in a first response message received from the session management node (140), which first response message indicates that the first session is established.

4. The method according to any of claims 2-3, wherein the first response message comprises an address of the server node (110).

5. The method according to any of claims 1-4, wherein *obtaining* (203) the credentials further comprises *obtaining,* from the server node 110, a client application for obtaining the credentials.

6. A computer program (670) comprising instructions, which when executed by a processor (650), causes the processor (650) to perform actions according to any of the claims 1-5.

7. A carrier (680) comprising the computer program (670) of claim 6, wherein the carrier (680) is one of an electronic signal, an optical signal, an electromagnetic signal, a magnetic signal, an electric signal, a radio signal, a microwave signal, or a computer-readable storage medium.

8. A method performed by a session management node (140) for assisting a User Equipment, UE, (120) in accessing services in an Internet Protocol, IP, Multimedia Subsystem, IMS, network (105) in a communications network (100), the UE (120) associated to a non-public network, NPN, (106) connected to the communications network (100), the method comprising:
*establishing* (302) a first session by receiving a first request message from the UE (120), which first request message comprises an indication indicating a session type, the session type being an IMS onboarding session type,
the method being **characterized in**:
*obtaining* (303), from a data management node (150), subscription data associated to the UE (120), which subscription data is related to the indicated session type, and further comprises *obtaining* an address of the server node (110), the address being a target address used by the UE (120) for establishing the first session, and
*instructing* (305), based on the indicated session type, a user plane node (160) to enforce a rule, which rule comprises enforcing a server node (110) related to provisioning as the only allowed destination for the first session, wherein the rule further comprises using the obtained address as the address of the server node (140), enabling the UE (120) to obtain credentials related to the UE (110) from the server node (110) in order to establish a second session to the IMS network (105) and to access services in the IMS network (105).

9. The method according to claim 8, further comprising:
*sending* (304), to the UE (120), a first response message, which first response message indicates that the first session is established.

10. The method according to claim 9, wherein the first response message comprises the obtained address of the server node (140).

11. The method according to any of claims 8-10, further comprising:
*receiving* (301), from a network node (130), a subscription request for session status events in the NPN (106), wherein the session status events are related to sessions being of an IMS onboarding session type, and
upon determining that the first session is an IMS onboarding session type, *sending* (306), to the network node (130), a notification message, which notification message notifies the network node (130) that a session being an IMS onboarding session type is established.

12. A computer program (770) comprising instructions, which when executed by a processor (750), causes the processor (750) to perform actions according to any of the claims 8-11.

13. A carrier (780) comprising the computer program (770) of claim 12, wherein the carrier (780) is one of an electronic signal, an optical signal, an electromagnetic signal, a magnetic signal, an electric signal, a radio signal, a microwave signal, or a computer-readable storage medium.

14. A User Equipment, UE, (120) configured to access services in an Internet Protocol, IP, Multimedia Subsystem, IMS, network (105) in a communications network (100), which UE (120) is adapted to be associated to a non-public network, NPN, (106) connected to the communications network (100), the UE (120) further being configured to:
*establish* a first session by sending a first request message towards a session management node (140), which first request message is adapted to comprise an indication indicating a session type for the first session, the session type adapted to be an IMS onboarding session type,
*connect* to a server node (110) by using the first session and an address associated to the server node (110), wherein the address is adapted to be pre-configured in the UE (120),
*obtain,* from the connected server node (110), credentials adapted to be related to the UE (120),
*end* the first session, and
*establish* a second session to the IMS network (105), which established second session is adapted to enable the UE (120) to access services in the IMS network (105) using the obtained credentials in an authentication procedure.

15. A session management node (140) configured to assist a User Equipment, UE, (120) to access services in an Internet Protocol, IP, Multimedia Subsystem, IMS, network (105) in a communications network (100), the UE (120) adapted to be associated to a non-public network, NPN, (106) connected to the communications network (100), the method comprising:
*establish* a first session by receiving a first request message from the UE (120), which first request message is adapted to comprise an indication indicating a session type, the session type adapted to be an IMS onboarding session type,
*obtain,* from a data management node (150), subscription data adapted to be associated to the UE (120), which subscription data is adapted to be related to the indicated session type, wherein the session management node (140) is configured to *obtain* the subscription data by further being configured to *obtain* an address of the server node (110), the address adapted to be a target address used by the UE (120) for establishing the first session, and
*instruct,* based on the indicated session type, a user plane node (160) to enforce a rule, which rule is adapted to comprise to enforce a server node (110) related to provisioning as the only allowed destination for the first session, wherein the rule further comprises using the obtained address as the address of the server node (140), wherein the rule is adapted to enable the UE (120) to obtain credentials adapted to be related to the UE (110) from the server node (110) in order to establish a second session to the IMS network (105) and to access services in the IMS network (105).

## Patentansprüche

1. Verfahren, das von einer Benutzerausrüstung, UE, (120) zum Zugriff auf Dienste in einem Internetprotokoll-, IP-, Multimedia-Subsystem-, IMS-, Netzwerk (105) in einem Kommunikationsnetzwerk (100) durchgeführt wird, wobei die UE (120) mit einem nicht-öffentlichen Netzwerk, NPN, (106) verknüpft ist, das mit dem Kommunikationsnetzwerk (100) verbunden ist, wobei das Verfahren Folgendes umfasst:
*Einrichten* (201) einer ersten Sitzung durch Senden einer ersten Anforderungsnachricht an einen Sitzungsverwaltungsknoten (140), wobei die erste Anforderungsnachricht eine Angabe über einen Sitzungstyp für die erste Sitzung umfasst, wobei es sich bei dem Sitzungstyp um einen IMS-Onboarding-Sitzungstyp handelt,
wobei das Verfahren **gekennzeichnet ist durch**:
*Verbinden* (202) mit einem Serverknoten (110) unter Verwendung der ersten Sitzung und einer mit dem Serverknoten (110) verknüpften Adresse, wobei die Adresse in der UE (120) vorkonfiguriert ist,
*Erhalten* (203) von Anmeldeinformationen für die UE (120) vom verbundenen Serverknoten (110),
*Beenden* (204) der ersten Sitzung, und
*Einrichten* (205) einer zweiten Sitzung zum IMS-Netzwerk (105), wobei die eingerichtete zweite Sitzung der UE (120) Zugriff auf Dienste im IMS-Netzwerk (105) unter Verwendung der in einer Authentifizierungsprozedur erhaltenen Anmeldeinformationen ermöglicht.

2. Verfahren nach Anspruch 1, wobei *Verbinden* (202) mit dem Serverknoten (110) Verwenden einer mit dem Serverknoten (110) verknüpften Adresse umfasst und wobei die Adresse:
- vom Sitzungsverwaltungsknoten (140) erhalten wird, wenn die Adresse in der UE (120) nicht vorkonfiguriert ist.

3. Verfahren nach Anspruch 2, wobei die Adresse, wenn sie vom Sitzungsverwaltungsknoten (140) erhalten wird, in einer ersten Antwortnachricht umfasst ist, die vom Sitzungsverwaltungsknoten (140) empfangen wird, und die erste Antwortnachricht angibt, dass die erste Sitzung eingerichtet wurde.

4. Verfahren nach einem der Ansprüche 2-3, wobei die erste Antwortnachricht eine Adresse des Serverknotens (110) umfasst.

5. Verfahren nach einem der Ansprüche 1-4, wobei *Erhalten* (203) der Anmeldeinformationen ferner *Erhalteneiner* Clientanwendung zum Erhalten der Anmeldeinformationen vom Serverknoten 110 umfasst.

6. Computerprogramm (670), das Anweisungen umfasst, die, wenn sie von einem Prozessor (650) ausgeführt werden, den Prozessor (650) veranlassen, Aktionen nach einem der Ansprüche 1-5 durchzuführen.

7. Träger (680), der das Computerprogramm (670) nach Anspruch 6 umfasst, wobei der Träger (680) eines von einem elektronischen Signal, einem optischen Signal, einem elektromagnetischen Signal, einem magnetischen Signal, einem elektrischen Signal, einem Funksignal, einem Mikrowellensignal oder einem computerlesbaren Speichermedium ist.

8. Verfahren, das von einem Sitzungsverwaltungsknoten (140) durchgeführt wird, um eine Benutzerausrüstung, UE, (120) beim Zugriff auf Dienste in einem Internetprotokoll-, IP-, Multimedia-Subsystem-, IMS-, Netzwerk (105) in einem Kommunikationsnetzwerk (100) zu unterstützen, wobei die UE (120) mit einem nicht-öffentlichen Netzwerk, NPN, (106) verknüpft ist, das mit dem Kommunikationsnetzwerk (100) verbunden ist, wobei das Verfahren Folgendes umfasst:
*Einrichten* (302) einer ersten Sitzung durch Empfangen einer ersten Anforderungsnachricht von der UE (120), wobei die erste Anforderungsnachricht eine Angabe über einen Sitzungstyp für die erste Sitzung umfasst, wobei es sich bei dem Sitzungstyp um einen IMS-Onboarding-Sitzungstyp handelt,
wobei das Verfahren **gekennzeichnet ist durch**:
*Erhalten* (303), von einem Datenverwaltungsknoten (150), von Abonnementdaten, die mit der UE (120) verknüpft sind und sich auf den angegebenen Sitzungstyp beziehen, und ferner Erhalten einer Adresse des Serverknotens (110) umfasst, wobei die Adresse eine Zieladresse ist, die von der UE (120) zum Einrichten der ersten Sitzung verwendet wird, und
*Anweisen* (305), basierend auf dem angegebenen Sitzungstyp, eines Benutzerknotens (160), eine Regel durchzusetzen, die Festlegen eines Serverknotens (110) im Zusammenhang mit Bereitstellen als das einzige zulässige Ziel für die erste Sitzung umfasst, wobei die Regel ferner Verwenden der erhaltenen Adresse als die Adresse des Serverknotens (140) umfasst, wodurch der UE (120) ermöglicht wird, Anmeldeinformationen für die UE (110) vom Serverknoten (110) zu erhalten, um eine zweite Sitzung zum IMS-Netzwerk (105) einzurichten und auf Dienste im IMS-Netzwerk (105) zuzugreifen.

9. Verfahren nach Anspruch 8, weiter umfassend:
*Senden* (304), an die UE (120), einer ersten Antwortnachricht, die angibt, dass die erste Sitzung eingerichtet wurde.

10. Verfahren nach Anspruch 9, wobei die erste Antwortnachricht die erhaltene Adresse des Serverknotens (140) umfasst.

11. Verfahren nach einem der Ansprüche 8-10, ferner umfassend:
*Empfangen* (301) von einem Netzwerkknoten (130) einer Abonnementanfrage für Sitzungsstatusereignisse im NPN (106), wobei sich die Sitzungsstatusereignisse auf Sitzungen des IMS-Onboarding-Sitzungstyps beziehen, und
nach Bestimmen, dass es sich bei der ersten Sitzung um eine IMS-Onboarding-Sitzung handelt, *Senden* einer Benachrichtigungsnachricht (306) an den Netzwerkknoten (130), wobei die Benachrichtigungsnachricht den Netzwerkknoten (130) darüber informiert, dass eine Sitzung vom IMS-Onboarding-Sitzungstyp eingerichtet wurde.

12. Computerprogramm (770), das Anweisungen umfasst, die, wenn sie von einem Prozessor (750) ausgeführt werden, den Prozessor (750) veranlassen, Aktionen nach einem der Ansprüche 8-11 durchzuführen.

13. Träger (780), der das Computerprogramm (770) nach Anspruch 12 umfasst, wobei der Träger (780) eines von einem elektronischen Signal, einem optischen Signal, einem elektromagnetischen Signal, einem magnetischen Signal, einem elektrischen Signal, einem Funksignal, einem Mikrowellensignal oder einem computerlesbaren Speichermedium ist.

14. Benutzerausrüstung, UE, (120), die für den Zugriff auf Dienste in einem Internetprotokoll-, IP-, Multimedia-Subsystem-, IMS-, Netzwerk (105) in einem Kommunikationsnetzwerk (100) konfiguriert ist, wobei die UE dazu angepasst ist, mit einem nicht-öffentlichen Netzwerk, NPN, (106) verknüpft zu werden, das mit dem Kommunikationsnetzwerk (100) verbunden ist, wobei die UE (120) weiter konfiguriert ist:
eine erste Sitzung *einzurichten,* indem eine erste Anforderungsnachricht an einen Sitzungsverwaltungsknoten (140) gesendet wird, wobei die erste Anforderungsnachricht angepasst ist, eine Angabe über den Sitzungstyp für die erste Sitzung zu umfassen, wobei der Sitzungstyp angepasst ist, ein IMS-Onboarding-Sitzungstyp zu sein,
eine *Verbindung* mit einem Serverknoten (110) unter Verwendung der ersten Sitzung und einer mit dem Serverknoten (110) verknüpften Adresse *herzustellen,* wobei die Adresse so angepasst ist, dass sie in der UE (120) vorkonfiguriert werden kann,
vom verbundenen Serverknoten (110) Anmeldeinformationen für die UE (120) zu *erhalten,*
die erste Sitzung zu *beenden* und
eine zweite Sitzung zum IMS-Netzwerk (105) *einzurichten,* wobei die eingerichtete zweite Sitzung so angepasst ist, dass sie der UE (120) ermöglicht, mit den in einer Authentifizierungsprozedur erhaltenen Anmeldeinformationen auf Dienste im IMS-Netzwerk (105) zuzugreifen.

15. Sitzungsverwaltungsknoten (140), der so konfiguriert ist, dass er eine Benutzerausrüstung, UE, (120) beim Zugriff auf Dienste in einem Internetprotokoll-, IP-, Multimedia-Subsystem-, IMS-, Netzwerk (105) in einem Kommunikationsnetzwerk (100) unterstützt, wobei die UE (120) so angepasst ist, dass sie mit einem nicht-öffentlichen Netzwerk, NPN, (106) verknüpft werden kann, das mit dem Kommunikationsnetzwerk (100) verbunden ist, wobei das Verfahren Folgendes umfasst:
*Einrichten* einer ersten Sitzung durch Empfangen einer ersten Anforderungsnachricht vom UE (120), wobei die erste Anforderungsnachricht dazu angepasst ist, eine Angabe über einen Sitzungstyp zu umfassen, wobei der Sitzungstyp angepasst ist, ein IMS-Onboarding-Sitzungstyp zu sein,
*Erhalten,* von einem Datenverwaltungsknoten (150), von Abonnementdaten, die so angepasst sind, dass sie mit der UE (120) verknüpft werden, wobei die Abonnementdaten angepasst sind, sich auf den angegebenen Sitzungstyp zu beziehen, wobei der Sitzungsverwaltungsknoten (140) so konfiguriert ist, dass er die Abonnementdaten erhält, indem er ferner konfiguriert ist, eine Adresse des Serverknotens (110) zu erhalten, wobei die Adresse so angepasst ist, dass sie als eine Zieladresse ist, die von der UE (120) zum Einrichten der ersten Sitzung verwendet wird, und
*Anweisen,* basierend auf dem angegebenen Sitzungstyp, eines Benutzerknotens (160), eine Regel durchzusetzen, die dazu angepasst ist, Festlegen eines Serverknotens (110) im Zusammenhang mit Bereitstellen als das einzige zulässige Ziel für die erste Sitzung zu umfassen, wobei die Regel ferner Verwenden der erhaltenen Adresse als die Adresse des Serverknotens (140) umfasst, wobei die Regel so angepasst ist, dass sie der UE (120) ermöglicht, Anmeldeinformationen für die UE (110) vom Serverknoten (110) zu erhalten, um eine zweite Sitzung zum IMS-Netzwerk (105) einzurichten und auf Dienste im IMS-Netzwerk (105) zuzugreifen.

## Revendications

1. Procédé mis en œuvre par un Équipement d'Utilisateur, UE, (120) pour accéder à des services dans un réseau de sous-système multimédia à protocole Internet, IP, IMS (105) au sein d'un réseau de communication (100), lequel UE (120) est associé à un réseau non public, NPN, (106) connecté au réseau de communication (100), le procédé comprenant :
*l'établissement* (201) d'une première session en envoyant un premier message de requête vers un nœud de gestion de session (140), lequel premier message de requête comprend une indication indiquant un type de session pour la première session, le type de session étant un type de session d'intégration IMS,
le procédé étant **caractérisé par** :
*Ia connexion* (202) à un nœud serveur (110) en utilisant la première session et une adresse associée au nœud serveur (110), dans lequel l'adresse est préconfigurée dans l'UE (120),
*l'obtention* (203), à partir du nœud serveur connecté (110), d'informations d'identification relatives à l'UE (120),
*la fin* (204) de la première session, et
*l'établissement* (205) d'une seconde session sur le réseau IMS (105), laquelle seconde session établie permet à l'UE (120) d'accéder aux services du réseau IMS (105) en utilisant les informations d'identification obtenues dans une procédure d'authentification.

2. Procédé selon la revendication 1, dans lequel *Ia connexion* (202) au nœud serveur (110) comprend l'utilisation d'une adresse associée au nœud serveur (110), et dans lequel l'adresse est :
- obtenue à partir du nœud de gestion de session (140), lorsque l'adresse n'est pas préconfigurée dans l'UE (120).

3. Procédé selon la revendication 2, dans lequel, lorsque l'adresse est obtenue du nœud de gestion de session (140), l'adresse est comprise dans un premier message de réponse reçu du nœud de gestion de session (140), lequel premier message de réponse indique que la première session est établie.

4. Procédé selon l'une quelconque des revendications 2-3, dans lequel le premier message de réponse comprend une adresse du nœud serveur (110).

5. Procédé selon l'une quelconque des revendications 1-4, dans lequel *l'obtention* (203) des informations d'identification comprend en outre *l'obtention, à* partir du nœud serveur (110), d'une application cliente pour obtenir les informations d'identification.

6. Programme informatique (670) comprenant des instructions qui, lorsqu'elles sont exécutées par un processeur (650), amènent le processeur (650) à mettre en œuvre des actions selon l'une quelconque des revendications 1-5.

7. Support (680) comprenant le programme informatique (670) selon la revendication 6, dans lequel le support (680) est l'un d'un signal électronique, d'un signal optique, d'un signal électromagnétique, d'un signal magnétique, d'un signal électrique, d'un signal radio, d'un signal hyperfréquence ou d'un support de stockage lisible par ordinateur.

8. Procédé mis en œuvre par un nœud de gestion de session (140) pour aider un Équipement d'Utilisateur, UE, (120) à accéder à des services dans un réseau de sous-système multimédia à protocole Internet, IP, IMS (105) au sein d'un réseau de communication (100), l'UE (120) étant associé à un réseau non public, NPN, (106) connecté au réseau de communication (100), le procédé comprenant :
*l'établissement* (302) d'une première session en recevant un premier message de requête de l'UE (120), lequel premier message de requête comprend une indication indiquant un type de session, le type de session étant un type de session d'intégration IMS,
le procédé étant **caractérisé par** :
*l'obtention* (303), à partir d'un nœud de gestion de données (150), de données d'abonnement associées à l'UE (120), lesquelles données d'abonnement sont liées au type de session indiqué, et comprend en outre l'obtention d'une adresse du nœud serveur (110), l'adresse étant une adresse cible utilisée par l'UE (120) pour établir la première session, et
*l'instruction* (305), sur la base du type de session indiqué, à un nœud de plan utilisateur (160) d'appliquer une règle, laquelle règle comprend l'application d'un nœud serveur (110) lié à l'approvisionnement comme seule destination autorisée pour la première session, dans lequel la règle comprend en outre l'utilisation de l'adresse obtenue comme adresse du nœud serveur (140), permettant à l'UE (120) d'obtenir des informations d'identification relatives à l'UE (110) auprès du nœud serveur (110) afin d'établir une seconde session sur le réseau IMS (105) et d'accéder aux services du réseau IMS (105).

9. Procédé selon la revendication 8, comprenant en outre :
*l'envoi* (304), à l'UE (120), d'un premier message de réponse, lequel premier message de réponse indique que la première session est établie.

10. Procédé selon la revendication 9, dans lequel le premier message de réponse comprend l'adresse obtenue du nœud serveur (140).

11. Procédé selon l'une quelconque des revendications 8-10, comprenant en outre :
*Ia réception* (301), d'un nœud de réseau (130), d'une requête d'abonnement aux événements d'état de session dans le NPN (106), dans lequel les événements d'état de session sont liés à des sessions de type session d'intégration IMS, et
après avoir déterminé que la première session est une session de type intégration IMS, *l'envoi* (306) au nœud de réseau (130) d'un message de notification, lequel message de notification informe le nœud de réseau (130) qu'une session de type session d'intégration IMS est établie.

12. Programme informatique (770) comprenant des instructions qui, lorsqu'elles sont exécutées par un processeur (750), amènent le processeur (750) à mettre en œuvre des actions selon l'une quelconque des revendications 8-11.

13. Support (780) comprenant le programme informatique (770) selon la revendication 12, dans lequel le support (780) est l'un d'un signal électronique, d'un signal optique, d'un signal électromagnétique, d'un signal magnétique, d'un signal électrique, d'un signal radio, d'un signal hyperfréquence ou d'un support de stockage lisible par ordinateur.

14. Équipement d'Utilisateur, UE, (120) configuré pour accéder à des services dans un réseau de sous-système multimédia à protocole Internet, IP, IMS (105) au sein d'un réseau de communication (100), lequel UE (120) est adapté pour être associé à un réseau non public, NPN, (106) connecté au réseau de communication (100), l'UE (120) étant en outre configuré pour :
*établir* une première session en envoyant un premier message de requête vers un nœud de gestion de session (140), lequel premier message de requête est adapté pour comprendre une indication indiquant un type de session pour la première session, le type de session étant adapté pour être un type de session d'intégration IMS,
*se connecter à* un nœud serveur (110) en utilisant la première session et une adresse associée au nœud serveur (110), dans lequel l'adresse est adaptée pour être préconfigurée dans l'UE (120),
*obtenir, à* partir du nœud serveur connecté (110), des informations d'identification adaptées pour être relatives à l'UE (120),
*terminer* la première session, et
*établir* une seconde session sur le réseau IMS (105), laquelle seconde session établie est adaptée pour permettre à l'UE (120) d'accéder aux services du réseau IMS (105) en utilisant les informations d'identification obtenues dans une procédure d'authentification.

15. Nœud de gestion de session (140) configuré pour aider un Équipement d'Utilisateur, UE, (120) à accéder à des services dans un réseau de sous-système multimédia à protocole Internet, IP, IMS (105) au sein d'un réseau de communication (100), l'UE (120) étant adapté pour être associé à un réseau non public, NPN, (106) connecté au réseau de communication (100), le procédé comprenant :
*l'établissement* d'une première session en recevant un premier message de requête de l'UE (120), lequel premier message de requête est adapté pour comprendre une indication indiquant un type de session, le type de session étant adapté pour être un type de session d'intégration IMS,
*l'obtention, à* partir d'un nœud de gestion de données (150), de données d'abonnement adaptées pour être associées à l'UE (120), lesquelles données d'abonnement sont adaptées pour être liées au type de session indiqué, dans lequel le nœud de gestion de session (140) est configuré pour obtenir les données d'abonnement en étant en outre configuré pour obtenir une adresse du nœud serveur (110), l'adresse étant adaptée pour être une adresse cible utilisée par l'UE (120) pour établir la première session, et
*l'instruction,* sur la base du type de session indiqué, à un nœud de plan utilisateur (160) d'appliquer une règle, laquelle règle est adaptée pour comprendre l'application d'un nœud serveur (110) lié à l'approvisionnement comme seule destination autorisée pour la première session, dans lequel la règle comprend en outre l'utilisation de l'adresse obtenue comme adresse du nœud serveur (140), dans lequel la règle est adaptée pour permettre à l'UE (120) d'obtenir des informations d'identification relatives à l'UE (110) auprès du nœud serveur (110) afin d'établir une seconde session sur le réseau IMS (105) et d'accéder aux services du réseau IMS (105).
